Europäisches Patentamt

European Patent Office

Office européen des brevets

(19)

(11) Veröffentlichungsnummer: **0 237 584**

**A2**

(12) **EUROPÄISCHE PATENTANMELDUNG**

(21) Anmeldenummer: **86101874.5**

(22) Anmeldetag: **14.02.86**

(51) Int. Cl.⁴: **F16L 3/12**

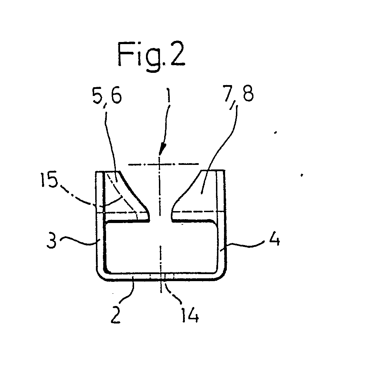

Die Bezugnahmen auf die Abbildungen 1, 3 und 4 gelten als gestrichen (Regel 43 EPÜ).

(43) Veröffentlichungstag der Anmeldung:
**23.09.87 Patentblatt 87/39**

(84) Benannte Vertragsstaaten:
**AT BE CH DE FR GB IT LI NL SE**

(71) Anmelder: **UNIMA Maschinenbau GmbH
Justus-von-Liebig-Strasse
D-6603 Sulzbach/Saar(DE)**

(72) Erfinder: **Fetsch, Rudolf, Dr. Ing.
Wiesenstrasse 72
D-6670 St. Ingbert(DE)**

(74) Vertreter: **Patentanwälte Phys. Bartels
Dipl.-Ing. Fink Dr.-Ing. Held
Lange Strasse 51
D-7000 Stuttgart 1(DE)**

(54) **Rohrschelle.**

(57) Eine Rohrschelle hat mittels mindestens einem Verbindungsmittel miteinander verbindbare Schellenhälften (1). Die Schellenhälfte hat einen im wesentlichen U-förmigen Querschnitt und in ihren Schenkeln je eine halbkreisförmige Ausnehmung zur Aufnahme eines Rohres, Schlauches oder dgl.. Mindestens eine der Schellenhälften hat eine im Bereich ihrer Ausnehmung nach innen gebogenen und parallel zur Achse der Ausnehmung verlaufenden Auflageteil (5 bis 8) für die Auflage des Rohres, des Schlauches oder dgl.. Um den Auflageteil deart auszubilden, daß die spezifische Flächenpressung zwischen dem Auflageteil und dem in der Rohrschelle eingespannten Rohr, Schlauch oder dgl. möglichst gleichmäßig zu verteilen, ist die Auflagefläche des Auflageteiles in ihrem dem Mittelteil (2) der U-förmigen Schellenhälfte benachbarten Abschnitt wesentlich länger als an ihrem davon entfernten Abschnitt. Der Rand des Auflageteiles verläuft entsprechend der Begrenzungslinie einer einfachen geometrischen Figur (Fig. 2).

Fig.2

## "Rohrschelle"

Die Erfindung bezieht sich auf eine Rohrschelle entsprechend dem Oberbegriff des Anspruches 1.

Bei einer bekannten Rohrschelle der vorgenannten Art hat der nach innen umgebogene Auflageteil in Achsrichtung der Ausnehmung gesehen überall die gleiche Länge, die etwa 1/4 bis 1/5 des Abstandes zwischen den beiden Schenkeln entspricht. Durch die im Abstand voneinander angeordneten Auflageteile wird eine elastische, das Rohr, den Schlauch oder dgl. umgebende Einlage derart abgestützt, daß sich deren innerhalb der Rohrschelle befindliche Mitte nach außen wölbt, wodurch ein fester Sitz der Einlage erreicht wird - (US-PS 3 582 029).

Der vorliegenden Erfindung liegt die Aufgabe zugrunde, den Auflageteil derart auszubilden, daß die spezifische Flächenpressung zwischen dem Auflageteil und dem in der Rohrschelle eingespannten Rohr, Schlauch oder dgl. möglichst gleichmäßig verteilt ist. Diese Aufgabe wird durch die Merkmale im Kennzeichnungsteil des Anspruches 1 erfindungsgemäß gelöst. Wegen der Verspannung der beiden Schellenhälften mittels mindestens eines diesen zugeordneten Verbindungsmittels, insbesondere Schraube, treten in der parallel zu diesen Verbindungsmitteln verlaufenden und in der Achse der Ausnehmung liegenden Ebene die größten Kräfte auf. Diese Kräfte werden erfindungsgemäß durch einen vergrößerten Auflageabschnitt aufgenommen, wobei sich die jeweiligen Längen der Auflageabschnitte in Achsrichtung der Ausnehmung gesehen um so stärker verkleinern, je weiter diese von der vorgenannten Ebene entfernt sind. Hierdurch wird eine gleichmäßigere Verteilung der zwischen der Rohrschelle und dem darin eingespannten Rohr, Schlauch oder dgl. auftretenden Druckkräfte und eine bessere Klemmwirkung als bei der bekannten Rohrschelle erreicht. Für die Herstellung des Auflageteils kann der sonst ausgeschnittene Rand des im Querschnitt U-förmigen Halbzeugprofils benutzt werden, wodurch sich eine wesentlich verbesserte Werkstoffausnutzung ergibt. Unter einer einfachen geometrischen Figur wird ein Mehreck gegebenenfalls mit auswärts und einwärts gebogenen Linien, ein Kreis, ein Kegelschnitt oder dgl. verstanden, wobei von dem Schenkel der Rohrschelle aus gesehen die Figur nicht breiter sondern eher schmäler wird.

Eine sehr günstige Druckverteilung wird durch die Merkmale des Anspruches 2 erreicht.

Die Merkmale der Ansprüche 3 und 4 betreffen bevorzugte Bauformen.

Die einander gegenüberliegenden Auflageteile einer Schellenhälfte dienen entsprechend den Merkmalen des Anspruches 5 zur Festlegung einer elastischen Einlage, die im Querschnitt gesehen als Halbkreis oder als Vollkreis ausgebildet werden kann.

Weitere Vorteile ergeben sich aus der Beschreibung und der Zeichnung. In dieser ist eine Schellenhälfte als Ausführungsbeispiel des Gegenstandes der Erfindung schematisch dargestellt. Es zeigen

Fig. 1 eine Vorderansicht,
Fig. 2 eine Seitenansicht,
Fig. 3 eine Draufsicht,
Fig. 4 einen Schnitt nach Linie IV-IV in Fig. 3 mit einer elastischen Einlage.

Die Schellenhälfte 1 hat entsprechend Fig. 2 einen im wesentlichen U-förmigen Querschnitt. An den Seiten eines Mittelteiles 2 ist je ein Schenkel 3 bzw. 4 angeordnet. Die Schenkel 3, 4 haben an ihren freien Enden jeweils zwei nach innen gebördelte Auflageteile 5 bis 8. Die Wände des Mittelteils 2, der Schenkel 3, 4 und der Auflageteile 5 bis 8 sind jeweils gleich dick und begrenzen jeweils eine im wesentlichen halbkreisförmige Ausnehmung 9.

Da die Auflageteile 5 bis 8 jeweils gleich ausgebildet sind, genügt nachstehend die Beschreibung des Auflageteils 5. Der Auflageteil 5 hat im Bereich des Schenkels 3 einen in Figur 1 gesehen im wesentlichen halbkreisförmigen Wandteil 10, der auf seinem ganzen Umfang nach innen vorsteht (Fig. 2). An den Wandteil 10 schließt sich in Richtung zum Innern der Schenkelhälfte 1 ein Wandteil 11 an, dessen Rand 12 von der Achse 13 der Ausnehmung 9 aus gesehen in bevorzugter Weise in Form eines Kegelschnittes verläuft, der von dem ihn tragenden Schenkel der Schellenhälfte aus gesehen zur Mitte schmäler wird.

Zwei gleich ausgebildete Schellenhälften 1 werden derart übereinander angeordnet, daß die Ausnehmungen 9 zur Aufnahme eines Rohres, eines Schlauches oder dgl. einander zugewandt sind. Das Rohr, der Schlauch oder dgl. wird zwischen den beiden Schellenhälften 1 mittels einer Schraube oder dgl. eingeklemmt, die eine mittlere Bohrung 14 im Mittelteil 2 der Schelle durchsetzt. Die dem Rohr, dem Schlauch oder dgl. zugewandte Auflagefläche des aus den Wandteilen 10 und 11 gebildeten Auflageteiles 5 ist derart bemessen, daß die spezifische Flächenpressung zwischen den einander gegenüberliegenden Auflageflächen der beiden Schellenhälften und dem Rohr bzw. dem Schlauch oder dgl. möglichst gleich ist.

Die Auflageteile 5, 7 und/oder 6, 8 können so weit zur Mitte der Schellenhälfte ragen, daß sie sich gerade berühren.

Der Wandteil 10 kann entfallen, so daß am oberen Ende des Schenkels 3 oder 4 kein nach innen stehender Abschnitt des Auflageteiles 5 vorhanden ist. Ein entsprechender Verlauf ist in Figur 2 durch die strichpunktierte Linie 15 dargestellt.

Die Schellenhälfe 1 wird vorzugsweise aus einem U-Profil aus Stahlblech hergestellt, bei dem die Auflageteile 5 bis 8 auf einem Zylindermantel liegend nach innen gebördelt sind. Der Abstand der Auflageteile 5 bis 8 vom Mittelteil 2 beträgt vorzugsweise zwei bis fünf Blechdicken.

Der entsprechend der Begrenzungslinie einer einfachen geometrischen Figur verlaufende Rand 12 kann auch die Form einer zur Mitte der Schellenhälfte hin gewölbten Kurve anderer Art als ein Kegelschnitt haben. Er kann auch wie zwei Schenkel eines Winkels oder wie die Begrenzungslinie eines an ein Quadrat oder Rechteck angeschlossenen Dreieck verlaufen. Die geraden Linien der geometrischen Figur können nach außen oder nach innen vorspringend gebogen sein.

Es kann auch eine Schellenhälfte 1 mit nur zwei einander gegenüberliegenden Auflageteilen 5, 7 vorgesehen werden, wobei dann der Bohrung 14 entsprechende Bohrungen auf beiden Seiten der Ausnehmung 9 vorgesehen sind.

Die Figur 4 zeigt eine Schellenhälfte 1, in welche eine elastische Einlage 15 eingelegt ist, die im Querschnitt im wesentlichen halbkreisförmig ausgebildet ist. Die Einlage 15 reicht über die beiden Auflageteile 5 bis 7 und hat an den Schenkeln 3 und 4 anliegende Ränder 16, 17. Zwischen den Rändern 16, 17 befindet sich ein im Querschnitt T-förmiger Vorsprung 18, der die Auflageteile 5, 7 untergreift. In die vom Vorsprung 18 gebildeten Rillen greifen die einander benachbarten Ränder der Auflageteile 5, 7 ein. Mittels des Vorsprunges 18 wird die Einlage 15 in der Schellenhälfte 1 gehalten, auch wenn die Ränder 16, 17 nicht vorhanden sind. Statt einer im Querschnitt halbkreisförmigen Einlage 15 kann auch eine im Querschnitt als Vollkreis ausgebildete Einlage benutzt werden.

## Ansprüche

1. Rohrschelle mit mittels mindestens einem Verbindungsmittel miteinander verbindbaren Schellenhälften (1), die einen im wesentlichen U-förmigen Querschnitt und in ihren Schenkeln je eine halbkreisförmige Ausnehmung zur Aufnahme eines Rohres, Schlauches oder dgl. haben und von denen mindestens eine im Bereich ihrer Ausnehmung einen nach innen gebogenen und parallel zur Achse der Ausnehmung verlaufenden Auflageteil (5 bis 8) für die Auflage des Rohres, des Schlauches oder dgl. aufweist, dadurch **gekennzeichnet,** daß die Auflagefläche des Auflageteiles in ihrem dem Mittelteil (2) der U-förmigen Schellenhälfte benachbarten Abschnitt wesentlich länger als an ihrem davon entfernten Abschnitt ist und daß der Rand des Auflageteiles entsprechend der Begrenzungslinie einer einfachen geometrischen Figur verläuft.

2. Rohrschelle nach Anspruch 1, dadurch **gekennzeichnet,** daß die Auflagefläche der Auflageteile (5 bis 8) derart ausgebildet ist, daß die von der unter Spannung stehenden Schelle auf das Rohr, den Schlauch oder dgl. ausgeübte Kraft auf dem Umfang des Rohres, des Schlauches oder dgl im wesentlichen gleichmäßig verteilt ist.

3. Rohrschelle nach Anspruch 1 oder 2, dadurch **gekennzeichnet,** daß der Rand des Auflageteiles (5 bis 8) auf einer zur Mitte der Schellenhälfte hin gewölbten Kurve verläuft.

4. Rohrschelle nach Anspruch 3, dadurch **gekennzeichnet,** daß der Rand des Auflageteiles (5 bis 8) von der Achse der Ausnehmung (9) aus betrachtet, im wesentlichen in Form eines Kegelschnittes verläuft.

5. Rohrschelle nach einem der vorhergehenden Ansprüche, mit einer elastischen Einlage (15), dadurch **gekennzeichnet,** daß die Einlage in ihrer Mitte einen nach außen vorstehenden T-förmigen Halteteil (18) hat, der an der Außenseite zweier benachbarter Auflageteile (5, 7) anliegt und in dessen Rille die Auflageteile eingreifen.

Fig.2